# EUROPEAN PATENT SPECIFICATION

(11) **EP 2 636 312 B1**
(45) Date of publication and mention of the grant of the patent: **08.05.2019**
(21) Application number: 12275021.9
(22) Date of filing: 08.03.2012
(51) Int. Cl.: A23D 9/013, A23D 9/04, C11C 3/08

(54) **Glyceride composition**
Glyceridzusammensetzung
Composition de glycéride

(43) Date of publication of application: 11.09.2013
(73) Proprietor: Bunge Loders Croklaan B.V., 1521 AZ Wormerveer (NL)
(72) Inventor: Wong, Wai Seng, 81000 Kulai, Johor (MY); Thean, See Wee, 81750 Masai, Johor (MY); Nordin, Suharul Pazillah Bin Che, 81700 Pasir Gudang, Johor (MY); 't Zand, Imro, 81100 Johor, Bahru (MY)
(74) Representative: Potter Clarkson

(56) References cited:
- WO-A1-2007/029018
- MUHAMAD RODDY RAMLI ET AL: "Production of High Oleic Palm Oils on a Pilot Scale", JOURNAL OF THE AMERICAN OIL CHEMISTS' SOCIETY, vol. 86, no. 6, 1 June 2009 (2009-06-01), pages 587-594, XP55031670, ISSN: 0003-021X, DOI: 10.1007/s11746-009-1394-3
- SIEW WAI LIN ET AL: "High Oleic Enhancement of Palm Olein via Enzymatic Interesterification", JOURNAL OF OLEO SCIENCE, vol. 58, no. 11, 1 January 2009 (2009-01-01), pages 549-555, XP55031835, ISSN: 1345-8957, DOI: 10.5650/jos.58.549

## Description

This invention relates to a process for the production of a glyceride composition.

Glycerides are present in many food products and are the main components of edible fats and oils. Glycerides may be in the form of mono-, di- or tri- glycerides having one, two or three fatty acid acyl groups, respectively, bonded to a glycerol backbone. Triglycerides are the predominant type of glyceride in edible fats and oils.

Some naturally occurring fats and oils have a high content of monounsaturated fatty acids, predominantly oleic acid. These are usually obtained from vegetable sources, such as olive, sunflower and canola. The oleic acid is present as bound acyl groups in glyceride molecules. Oils having a high oleic acid content, such as olive oil, are low in saturated fatty acids (SAFA) and are believed to have health benefits.

Edible glyceride oils having a high oleic acid content for use in food are desirably inexpensive, resistant to oxidation and low in SAFA. It is also advantageous for the glyceride oils to remain clear at low temperatures since a cloudy oil can be unattractive to consumers. It is also desirable to some consumers for the oil to be from a non-genetically modified source.

Ollivier et al, Food Chemistry, 97, (2006), 382-393 discloses the composition and characteristics of French virgin olive oil. Olive oils tend to be relatively expensive.

US 7,741,542 describes canola oil having an increased oleic acid content. The oil is produced from genetically modified plants and so is unacceptable to some consumers.

Siew Wai Lin et al, Journal of Oleo Science, 58, 11, 549-555, (2000) discloses the high oleic enhancement of palm olein via enzymatic esterification.

Liew Han-Fang, MSc Thesis, June 2007, FS 2007 10, Universiti Putra Malaysia, "Enzymatic Incorporation of Oleic Acid into Refined Bleached and Deodorised Palm Olein" relates to an investigation on the performance of lipases in obtaining a high oleic content cooking oil.

Ramli et al, J. Am. Oil. Chem. Soc., 2009, 86: 587-594 relates to the production of high oleic palm oils on a pilot scale. Refined, bleached and deodorized palm olein with an iodine value (IV) of 62 was chemically interesterified with methyl oleate at a weight ratio of 50:50.

There remains a need for glyceride compositions having a relatively high oleic acid content that have one or more of the following advantages of being inexpensive, resistant to oxidation, low in SAFA, clear when stored at low temperatures and obtainable from a non-genetically modified source.

According to the present invention, there is provided a process as defined in the appended claim 1.

Surprisingly, it has been found to be possible to produce a glyceride composition having a high oleic acid content from relatively inexpensive starting materials. The glyceride composition has an oleic acid content that is comparable to that of olive oil but can be produced at a much lower cost.

The glyceride compositions produced by the process of the invention are edible and non-toxic and may be used in food applications. For example, the compositions may be used as cooking or frying oils or as components of food products in their own right, such as salad oils, mayonnaise and salad dressings.

The glyceride composition comprises monoglycerides, diglycerides and triglycerides having fatty acid acyl groups. The term fatty acid, as used herein, refers to straight chain saturated or unsaturated (including mono- and poly- unsaturated) carboxylic acids having from 12 to 20 carbon atoms.

The glyceride composition comprises from 5 to 25 %, preferably from 8 to 25 % by weight, diglycerides based on the total weight of the composition. Preferably, the diglyceride content is from 10 to 20 % by weight, such as from 11 to 15 % by weight based on the total weight of the composition. Glyceride compositions containing these relatively high levels of diglycerides may be produced enzymatically.

Triglycerides are the predominant glyceride present in the product. The triglyceride content is at least 75 % by weight, preferably more than 80 % by weight, more preferably 82 to 95 % by weight, such as from 85 to 90 % by weight based on the total weight of the composition.

The compositions may also comprise smaller amounts of monoglycerides. Preferably, the composition comprises less than 5% by weight of monoglycerides based on the total weight of the composition.

The glyceride content of the glyceride composition can be determined by methods well known to those skilled in the art such as GC or HPLC.

The weight ratio of palmitic acid to stearic acid present as acyl groups in the glycerides contained in the glyceride composition is preferably at least 2.5:1, more preferably at least 4:1, even more preferably at least 5:1. The levels of these and other fatty acids present in the compositions of the invention can be determined by methods well-known to those skilled in the art such as GC-FAME.

The glyceride composition preferably comprises from 65 to 75 % by weight of oleic acid, present as acyl groups based on the total C12 to C20 fatty acids present in the glycerides.

The glyceride composition preferably comprises from 11 to 16 % by weight of palmitic acid, present as acyl groups based on the total C12 to C20 fatty acids present in the glycerides.

The content of stearic acid present as acyl groups in the glycerides is preferably less than 2.9 % by weight based on the total C12 to C20 fatty acids present in the glycerides. Additionally or alternatively, the content of linolenic acids (C18:3) present as acyl groups in the glycerides is preferably less than 0.5 % by weight based on the total C12 to C20 fatty acids present in the glycerides.

The content of linoleic acid present as acyl groups in the glycerides is preferably at least 14 % by weight, such as from 15 to 20 % by weight based on the total C12 to C20 fatty acids present in the glycerides.

The free fatty acid content (i.e., fatty acids not bound as part of glycerides) of the triglyceride compositions is typically less than 5 % by weight, more preferably less than 3 % by weight, such as less than 1.5 % by weight, based on the total weight of the composition.

The glyceride composition preferably has a weight ratio of diglycerides to free fatty acids of at least 5:1, more preferably at least 8:1.

The composition preferably has a SAFA content of less than 19 % by weight, more preferably less than 18% by weight, such as from 14 to 18 % by weight, based on the total weight of the composition. SAFA is based on the fatty acids present in the glycerides.

The composition preferably has a POP (i.e., 1,3-dipalmitoyl 2-oleoyl glyceride) content in the range of from 1 to 10 % by weight, based on total triglycerides. Alternatively or additionally, the POO (i.e., 1-palmitoyl 2,3-dioleoyl glyceride) content is preferably in the range of 10 to 30 % by weight, based on total triglycerides.

The glyceride composition preferably has a cloud point below 2 °C, more preferably less than 0 °C, such as less than -1 or -2 °C. Cloud point is the temperature at which the oil becomes cloudy and may be determined by, for example AOCS Cc 6-25. A low cloud point means that the glyceride compositions remain clear on storage at low temperatures.

The glyceride composition is especially useful for food applications where the oil or foodstuff is kept at temperatures (typical for a refrigerator) of from 4 °C to 7 °C, since no crystallization of the glyceride compositions occurs during storage at these temperatures.

The composition preferably has an N-value (solid fat content or SFC) at 10 °C of less than 15, more preferably less than 10, most preferably less than 5, and at 5 °C of less than 10, determined by NMR on the composition stabilised for 16 hours at 0 °C.

The composition preferably has an iodine value of from 80 to 90. Iodine value is determined by AOCS Cd 1d-92.

The composition may comprise tocopherols and tocotrienols, typically in a total amount of less than 3 % by weight, such as less than 2 % by weight or less than 1 % by weight based on the total weight of the composition. Tocopherols and tocotrienols may be derived from a palm oil product used to produce the compositions.

The glyceride composition is prepared by enzymatic rearrangement, for example of a triglyceride in the presence of oleic acid. The composition may be the direct product obtained after enzymatic rearrangement, or it may be a fraction of that product or a blend of the product or fraction with one or more other fats or oils, such as high oleic sunflower oil, rapeseed oil, soybean oil, sunflower oil, palm oil or fractions of palm oil, micronized fat particles (for example as disclosed in WO 2011/134627) and mixtures thereof.

Preferably, the glyceride composition comprises at least 65 % by weight based on the total weight of the composition of a product obtainable by reacting a fractionated oil or fat, having an oleic acid content present as acyl groups of from 45 to 60% by weight based on the total C12 to C20 fatty acids present in the glycerides, with free oleic acid in the presence of a 1,3-specific lipase.

The fractionated oil or fat is a palm oil olein.

One preferred glyceride composition comprises at least 75% by weight triglycerides and from 5 to 25% by weight diglycerides based on the total weight of the composition, wherein the glyceride composition comprises at least 65% by weight of oleic acid and from 10 to 20% by weight of palmitic acid based on the total C12 to C20 fatty acids present in the glycerides , said oleic acid and palmitic acid being present as acyl groups in mono-, di- or tri- glycerides, wherein the weight ratio of palmitic acid to stearic acid present as acyl groups in the glycerides is at least 2.5, the content of stearic acid present as acyl groups in the glycerides is less than 2.9 % by weight based on the total C12 to C20 fatty acids present in the glycerides, the content of linolenic acids present as acyl groups in the glycerides is less than 0.5 % by weight based on the total C12 to C20 fatty acids present in the glycerides, the POP content is in the range of from 1 to 10 % by weight based on total triglycerides and the POO content is in the range of 10 to 30 % by weight based on total triglycerides.

Another preferred glyceride composition comprises at least 75% by weight triglycerides and from 5 to 25% by weight diglycerides based on the total weight of the composition, wherein the glyceride composition comprises at least 65% by weight of oleic acid and from 10 to 20% by weight of palmitic acid based on the total C12 to C20 fatty acids present in the glycerides, said oleic acid and palmitic acid being present as acyl groups in mono-, di- or tri- glycerides, wherein the weight ratio of palmitic acid to stearic acid present as acyl groups in the glycerides is at least 2.5, the content of stearic acid present as acyl groups in the glycerides is less than 2.9 % by weight based on the total C12 to C20 fatty acids present in the glycerides, the content of linolenic acids present as acyl groups in the glycerides is less than 0.5 % by weight based on the total C12 to C20 fatty acids present in the glycerides, the composition has an N-value at 10 °C of less than 15, more preferably less than 10, most preferably less than 5, and at 5 °C of less than 10, determined by NMR on the composition stabilised for 16 hours at 0 °C, an iodine value of from 80 to 90 and comprises tocopherols and tocotrienols in a total amount of less than 3 % by weight based on the total weight of the composition.

The glyceride composition may comprise or may consist of the product obtainable by the process of the invention.

The process of the invention comprises reacting a palm oil olein, having an oleic acid content present as acyl groups of from 45 to 60% by weight based on the total C12 to C20 fatty acids present in the glycerides, with free oleic acid in the presence of a 1,3-specific lipase. By free oleic acid, it is meant that the oleic acid is not chemically bound as part of a glyceride.

The process of the invention is preferably carried out under an inert atmosphere, such as of nitrogen.

The reaction of the palm oil olein with oleic acid is carried out at a temperature of from 65 °C to 80 °C.

The reaction of the palm oil olein with oleic acid is preferably carried out in the presence of from 0.01 to 0.5 % by weight of water.

In the process of the invention, the weight ratio of the palm oil olein to oleic acid is preferably less than 1:1, more preferably in the range of from 1:1 to 1:3.

The palm oil olein is an oil that has been produced by a process that comprises a step of fractionation. Fractionation of fats and oils into higher and lower melting fractions is a technique that is well-known to those skilled in the art. The higher melting fraction is sometimes termed an olein and the lower melting fraction is sometimes called a stearin. Fractionation may be carried out in the presence of a solvent (wet) or without a solvent (dry).

Typically, the palm oil olein has a diglyceride content of less than 10 % by weight, such from 5 to 10% by weight based on the total weight of the composition. The diglyceride content of the palm oil olein may be lower than the diglyceride content of the glyceride composition produced as the product of the invention. The palm oil olein has an oleic content present as acyl groups of from 45 to 60 % by weight, based on the total C12 to C20 fatty acids present in the glycerides. The palm oil olein preferably has a POP (i.e., 1,3-dipalmitoyl 2-oleoyl glyceride) content in the range of from 10 to 30 % by weight based on total triglycerides. Alternatively or additionally, the POO (i.e., 1-palmitoyl 2,3-dioleoyl glyceride) content is preferably in the range of from 30 to 40 % by weight based on total triglycerides.

The palm oil olein may have an IV of between 55 and 75, more preferably from 60 to 70.

The lipase that is used in the process is a 1,3- specific lipase. By this it is meant that the lipase catalyses the reaction at the 1 and 3 positions on the glyceride at a greater rate than the reaction at the 2 position. The lipase is from *Rhizopus oryzae.* The lipase is preferably immobilised. Typically, the reaction is carried out by passing the starting materials through a packed bed comprising immobilised lipase.

The process of the invention is carried out to produce the product without subsequent fractionation.

The process may comprise a further step deacidification. Deacidification reduces the content of free fatty acids in the composition. Deacidification may be carried out by, for example, short path distillation.

One preferred process of the invention is a process for producing a glyceride composition having an oleic acid content of at least 65% by weight based on the total C12 to C20 fatty acids present in the glycerides comprising reacting a palm oil olein with free oleic acid as defined in claim 1, wherein the glyceride composition comprises at least 75% by weight triglycerides and from 5 to 25% by weight diglycerides based on the total weight of the composition, at least 65% by weight of oleic acid and from 10 to 20% by weight of palmitic acid based on the total C12 to C20 fatty acids present in the glycerides, said oleic acid and palmitic acid being present as acyl groups in mono-, di- or triglycerides, wherein the weight ratio of palmitic acid to stearic acid present as acyl groups in the glycerides is at least 2.5, the content of stearic acid present as acyl groups in the glycerides is less than 2.9 % by weight based on the total C12 to C20 fatty acids present in the glycerides, the content of linolenic acids present as acyl groups in the glycerides is less than 0.5 % by weight based on the total C12 to C20 fatty acids present in the glycerides, the composition has an iodine value of from 80 to 90 and comprises tocopherols and tocotrienols in a total amount of less than 3 % by weight based on the total weight of the composition.

The following non-limiting examples illustrate the invention and do not limit its scope in any way. In the examples and throughout this specification, all percentages, parts and ratios are by weight unless indicated otherwise. Percentages of triglycerides, diglycerides, monoglycerides are based on the total weight of the composition. Percentages of fatty acids present as acyl groups in tri-, di- and mono- glycerides are based on the total C12 to C20 fatty acids present in the glycerides (including tri-, di- and mono- glycerides). Percentages of individual triglycerides (such as POO and POP) are based on total triglycerides present.

### Examples

A feedstock of POfiv64 (40% by weight of the feedstock) was mixed with oleic acid (60% by weight of the feedstock) at 70°C. The reaction mixture was subjected to a 1,3 specific lipase (Lipase D, RM-C01-S2-d-081710-3) reaction at a moisture content of 0.10% by weight on the reaction mixture and an operation temperature of 70°C. The enzymatic reaction took place in a packed bed reactor. Nitrogen was bubbled through the feed and the reaction product. The enzymatic rearranged product was deacidified through a short path distillation device. No additional fractionation was required.

The product was analysed and the results are given in the following table.

| **Category** | **Raw Material** | | | **Product** |
|---|---|---|---|---|
| **Materials** | **Pofiv 64** | **Pofiv 64** | **Oleic Acid** | **POfiv85** |
| **Feedstock** | * | * | * | **40% POfiv64 + 60% oleic acid** |
| **Remarks** | **Feed** | **Feed** | **PALMAC 770** | * |
| **Basic Analysis** | | | | |
| **IV FAME** | 64.4 | 64.2 | 98.9 | 84.9 |
| **FFA (% oleic acid)** | 0.07 | * | * | 1.0 |
| **Cloud Point (°C)** | 3.5 | 3.7 | 0 | -2.4 |
| **Colour (51/4" cell) Red** | 3.1 | 3.5 | <1 | 5.7 |

| **FAME (%)** | | | | |
|---|---|---|---|---|
| **C12** | * | 0.4 | 0.04 | 0.2 |
| **C14** | * | 1.0 | 0.03 | 0.4 |
| **C16:0** | 33.8 | 34.0 | 1.1 | 13.4 |
| **C18:0** | 3.7 | 3.9 | 2.1 | 2.3 |
| **C18:1 (t)** | 0.1 | * | 0.7 | 0.3 |
| **C18:1 (c)** | 47.1 | 46.0 | 82.8 | 67.6 |
| **C18:2 (t)** | 0.3 | * | 0.1 | 0.3 |
| **C18:2 (c)** | 13.0 | 13.9 | 12.3 | 15.1 |
| **C18:3 (t)** | * | * | * | * |
| **C18:3 (c)** | 0.3 | 0.3 | 0.4 | 0.1 |
| **C20** | 0.4 | 0.4 | 0.2 | 0.3 |
| **SAFA** | 37.9 | 39.7 | 3.47 | 16.6 |
| **MUFA** | 47.2 | 46.0 | 83.5 | 67.9 |
| **PUFA** | 13.6 | 14.2 | 12.8 | 15.5 |

| **SFC (Unstabilised)** | | | | |
|---|---|---|---|---|
| **N0** | 7 | 13 | * | 2 |
| **N5** | 0 | * | * | 0 |
| **N10** | 0 | 1 | * | 0 |

| **SFC (Stabilised 16 hrs at 0 degC)** | | | | |
|---|---|---|---|---|
| **N0** | 58 | * | * | 9 |
| **N5** | 49 | * | * | 6 |
| **N10** | 20 | * | * | 0 |

| **Diglycerides (GC)** | | | | |
|---|---|---|---|---|
| **SUM DAG (%)** | 8 | * | * | 13 |

| **SILVER PHASE (%)** | | | | |
|---|---|---|---|---|
| **SSS** | 0.2 | * | * | 0.2 |
| **SOS** | 18.0 | * | * | 2.3 |
| **SSO** | 4.8 | * | * | 1.5 |
| **SLS** | 11.0 | * | * | 0.6 |
| **SSL** | 0.8 | * | * | 0.2 |
| **SOO** | 39.8 | * | * | 15.2 |
| **OSO** | 0.7 | * | * | 2.3 |
| **SOL** | 14.2 | * | * | 6.9 |
| **OOO** | 5.7 | * | * | 29.2 |
| **TOTAL TG%** | 100.0 | * | * | 100 |
| **Cloud Point (0 °C)** | 3.7 | | | -2.8 |

## Claims

1. Process for producing a glyceride composition having an oleic acid content of at least 65% by weight based on the total C12 to C20 fatty acids present in the glycerides comprising reacting a palm oil olein, having an oleic acid content present as acyl groups of from 45 to 60% by weight based on the total C12 to C20 fatty acids, with free oleic acid in the presence of a 1,3-specific lipase from *Rhizopus oryzae*, wherein the reaction of the palm oil olein with oleic acid is carried out at a temperature of from 65 °C to 80 °C and the glyceride composition is produced without a subsequent step of fractionation.

2. Process as claimed in claim 1, wherein the reaction of the palm oil olein with oleic acid is carried out in the presence of from 0.01 to 0.5 % by weight of water.

3. Process as claimed in claim 1 or claim 2, wherein the weight ratio of the palm oil olein to oleic acid is less than 1:1, preferably in the range of from 1:1 to 1:3.

## Patentansprüche

1. Vorgang zum Herstellen einer Glyceridzusammensetzung, die einen Ölsäuregehalt von wenigstens 65 Gew.-% basierend auf der Gesamtmenge an C12- bis C20-Fettsäuren, die in den Glyceriden vorliegen, aufweist, umfassend ein Umsetzen eines Palmöloleins, wobei ein Ölsäuregehalt von 45 bis 60 Gew.-% als Acylreste basierend auf der Gesamtmenge an C12-bis C20-Fettsäuren vorliegt, mit einer freien Ölsäure in Anwesenheit einer 1,3-spezifischen Lipase von *Rhizopus oryzae*, wobei die Reaktion des Palmöloleins mit Ölsäure bei einer Temperatur von 65 °C bis 80 °C durchgeführt wird und die Glyceridzusammensetzung ohne einen nachfolgenden Schritt des Fraktionierens hergestellt wird.

2. Vorgang nach Anspruch 1, wobei die Reaktion des Palmöloleins mit Ölsäure in Anwesenheit von 0,01 bis 0,5 Gew.-% Wasser durchgeführt wird.

3. Vorgang nach Anspruch 1 oder 2, wobei das Gewichtsverhältnis des Palmöloleins zu Ölsäure bei weniger als 1:1, bevorzugt im Bereich von 1:1 bis 1:3 liegt.

## Revendications

1. Procédé de production d'une composition glycéridique ayant une teneur en acide oléique d'au moins 65 % en poids sur la base des acides gras C12 à C20 totaux présents dans les glycérides, comprenant la réaction d'une oléine d'huile de palme, ayant une teneur en acide oléique présente sous forme de groupes acyles de 45 à 60 % en poids sur la base des acides gras C12 à C20 totaux, avec l'acide oléique libre en présence d'une lipase 1,3-spécifique provenant de *Rhizopus oryzae*, dans lequel la réaction de l'oléine d'huile de palme avec l'acide oléique est effectuée à une température de 65 °C à 80 °C et la composition glycéridique est produite sans étape ultérieure de fractionnement.

2. Procédé selon la revendication 1, dans lequel la réaction de l'oléine d'huile de palme avec l'acide oléique est effectuée en présence de 0,01 % à 0,5 % en poids d'eau.

3. Procédé selon la revendication 1 ou 2, dans lequel le rapport en poids de l'oléine d'huile de palme à l'acide oléique est inférieur à 1:1, de préférence dans la gamme de 1:1 à 1:3.
